# EUROPEAN PATENT APPLICATION

(11) **EP 1 353 426 A2**
(43) Date of publication of application: **15.10.2003**
(21) Application number: 03252328.4
(22) Date of filing: 11.04.2003
(51) Int. Cl.: H02G 3/04

(54) **Improvements in and relating to trunking**

(30) Priority: 12.04.2002 GB 0208467
(71) Applicant: Novar ED&S Limited, Weybridge, Surrey KT13 9UX (GB)
(72) Inventor: Doherty, Thomas, c/o Novar ED&S Limited, Weybridge, Surrey KT13 9UX (GB)
(74) Representative: Wise, Stephen James

(57) **Abstract**

A trunking system (1) comprises a trunking (120) and a retaining member (8). The trunking has a base (2) and a lid (3) for the base, the base having a first and a second parallel side walls (4 and 6 respectively) extending therefrom, the side walls each having a top edge (40 and 60 respectively), with a first and a second connecting means (41 and 42, and 61 and 62 respectively) extending along the top edge of each side wall. The lid having a third connecting means (30), the third connecting means arranged to co-operate with the said first connecting means to releasably retain the lid to the base, the retaining member being arranged such that when it is in a closed position the lid may be fitted to the base over the retaining member. The retaining member has a first end (91) with a hinge (92) and a second end (82), the retaining member being arranged to be held closed at each end by respective connecting means, and when open, to be held open by co-operating abutment surfaces (103 and 104) on the first retaining means.

## Description

The present invention relates to retaining members for trunking.

Trunking for containing electrical cables consisting of a channel member having a base and upstanding side walls with a removable cover mountable to the side walls so as to form an enclosed space to contain electrical cables is known. Such trunking may have multiple compartments, and may also be used to contain optical fibres or pipes. It is known to provide retaining members to retain the cables and/or fibres and/or pipes in a trunking base when the lid is removed from the base. Such retaining members facilitate the process of adding cables to a trunking base, and subsequently fitting the lid. A known retaining member is provided with means to release the retaining member from the trunking to enable additional cables to be placed in the base. However, a problem with such a known retaining member, is that an installer has a problem of finding somewhere to place the cable retainer while adding cables, and then replacing it in the correct place on completion. Not only is this inconvenient, and particularly so if the trunking is mounted in a place that is difficult to access, for example, at a high level, but there is a risk that such cable retainers may be mislaid or replaced at incorrect positions along the length of a trunking system.

A hinged retaining member or lid clamp is disclosed in US patent number US 6,029,713 (Giovanni Miranda). Miranda discloses a trunking and at least one retaining member, the trunking comprising at least a base and a lid for the base, the base having a first and a second parallel side walls extending therefrom, the side walls each having a top edge, with a first and a second connecting means extending along the top edge of each side wall, and the lid having a third connecting means, the third connecting means arranged to co-operate with the said first connecting means to releasably retain the lid to the base, the retaining member being arranged such that when it is in a closed position the lid may be fitted to the base over the retaining member, the retaining member has a first end with first retaining means and a hinge and a second end, the retaining member being arranged to be held closed at each end by respective connecting means.

A problem with the cable retainer of Miranda is that when open, the cable retainer will hang under the influence of gravity, and hence may rest in a partly closed position obstructing access to an enclosed space of the trunking, preventing the easy insertion of cables into the enclosed space of the base of the trunking.

The present invention, is characterised in that the retaining member when open, is arranged to be held open by co-operating abutment surfaces on the first retaining means.

The advantage of the retaining member being held open by the co-operating abutment surfaces is that the retaining member when open does not obstruct access to an enclosed space within the base of the trunking, and hence cables and the like may be inserted easily into the enclosed space.

A benefit of the retaining member being retained to the base is that a risk of the retaining member being lost by an installer is avoided.

Preferably the retaining member further comprises a second end having a latch arranged to co-operate with the second connecting means to hold the retaining member in the closed position.

A benefit of the retaining member having a latch is that the retaining member may be latched in the closed position, so as to retain cables and similar within the base of the trunking.

Preferably the retaining member in an open position is arranged to be held open in a plane at substantially 90 degrees to the closed position.

A benefit of the retaining member being arranged to held in an open position in a plane at substantially 90 degrees to the closed position is that an installer may easily lay cables into the trunking base without any hindrance from the retaining member in the open position which is retained to the first side wall.

Preferably the hinge comprises a flexible hinge portion arranged to hingedly connect a flap part of the retaining member to a clip portion of the retaining member.

Preferably the clip portion is arranged to be mounted to the second connecting means on the first sidewall.

Preferably the clip portion and the flap part are each provided with a protrusion, the protrusions each having an abutment surface, the abutment surfaces arranged to abut each other to retain the flap portion in an open position.

Preferably at least one protrusion is arranged to be resiliently deflectable with respect to the retaining member. More preferably, the at least one protrusion is mounted to the flap part.

A benefit of one protrusion being resilient is that the flap may be more positively held in the open position, without requiring excessive force to open and close the flap part of the retaining member.

Specific embodiments of the invention will now be described by way of example with reference to the accompanying drawings in which:-
Figure 1 is a perspective view from one end and the front of a trunking system according to the invention with a lid absent, and showing a retaining member in the open position and a retaining member in the closed position;
Figure 2 is an end view of the system shown in Figure 1, showing a single retaining member in an open position; and
Figure 3 is an end view of the system shown in Figure 1, showing a single retaining member in a closed position with the lid fitted to the base; and
Figure 4 is an enlarged sectional view of a portion of the retaining member shown in Figure 1.

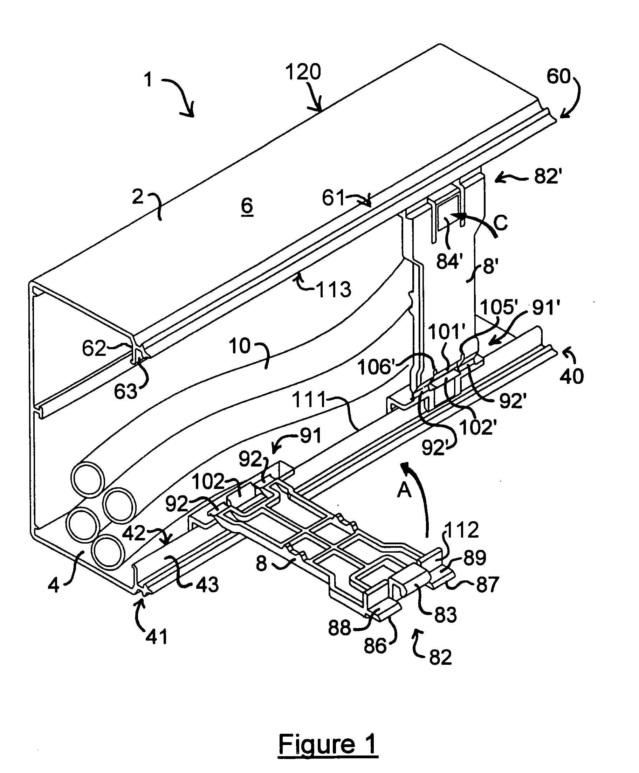

From the Figures a trunking system 1 comprises a trunking 120 having a base 2, and a lid 3 for the base. The base 2 having a first and a second parallel side walls 4 and 6 respectively, extending therefrom, the side walls each having a top edge 40 and 60 respectively, with a first and a second connecting means 41 and 42, and 61 and 62 respectively extending along the top edge of each side wall. The first connecting means 41 and 61 are identical, as are the second connecting means 42 and 62. The lid 3 has a third connecting means 30 and 30', the third connecting means arranged to co-operate with the first connecting means 41 and 61 to releasably retain the lid to the base. From Figure 1 may be seen a retaining member 8 shown in an open position, and a second retaining member 8' shown in a closed position. Each retaining member has a hinge end 91 and 91' and a releasable end 82 and 82'. The hinge end 91 and 91' comprises a first retaining means to retain the retaining member to the trunking.

When closed, the retaining members 8 enclose a space 7 within the base 2 in which cables 10 may be placed. The base 2 has a rear wall 5, with an external face 51 for mounting to a surface such as a wall of a building.

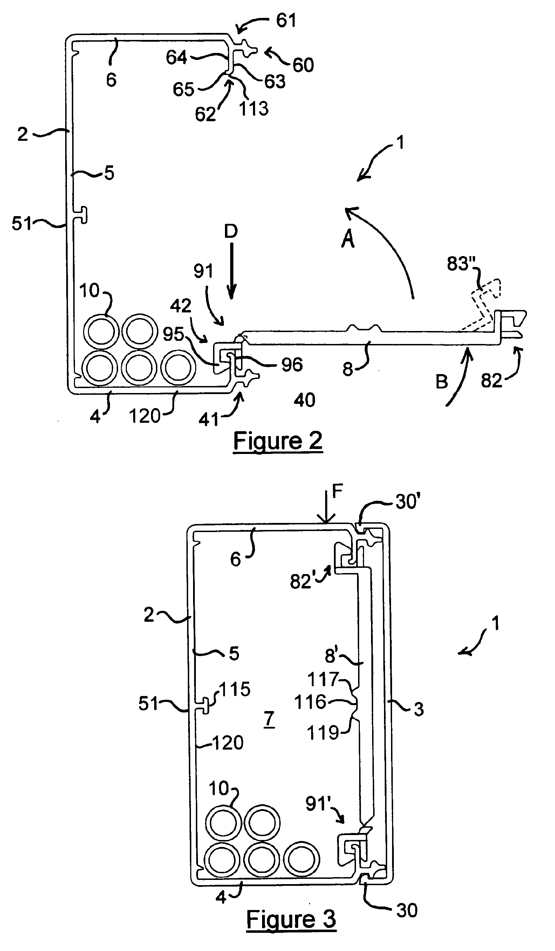

The releasable end 82 comprises a resilient latch 83, having a pad 84 and a tooth 85, and a pair of location stops 86 and 87 having location faces 88 and 89 respectively. In use the resilient latch may be engaged by hinging the retaining member 8 in the direction of arrow A and deflecting the resilient latch 83 as shown by the dotted lines in Figure 2 to the deflected position 83" by applying pressure on the pad 84 in the direction of arrow B so that the location faces 88 and 89 abut a front face 63 of the second connecting means 62, when the resilient latch may be released so that the tooth 85 abuts rear face 64 and is retained by lip 65 of the second connecting means 62. To open the retaining member, the pad 84 is pressed in the direction of arrow C to disengage the resilient latch from the rear face 64.

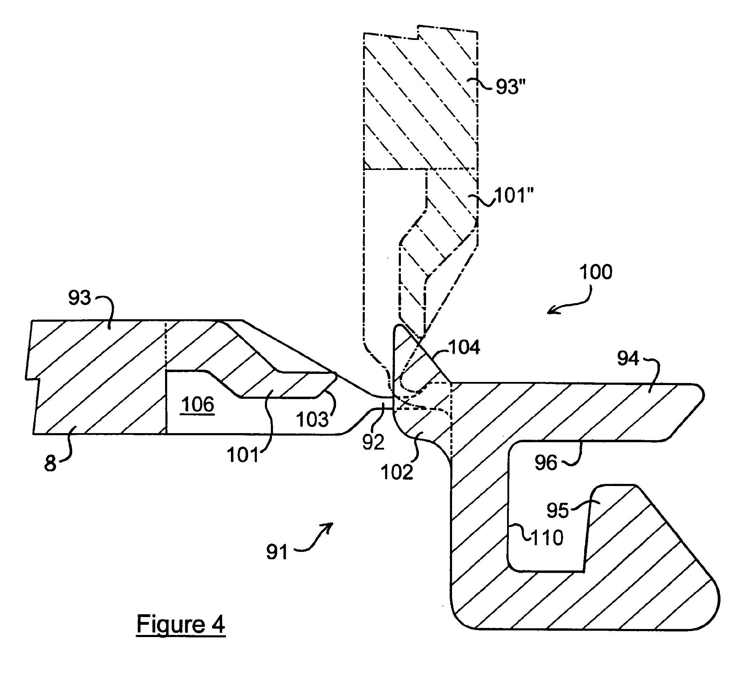

From Figure 4, the hinge end 91 may be seen to comprise a thin flexible hinge portion 92 connecting the flap 93 to the clip portion 94. The first retaining means has a clip portion 94 comprises a latch 95 and a location face 96, and is arranged to be retained to the second connecting means 42 by pressing it on in the direction of arrow D in Figure 2. The hinge end 91 has a latch 100 comprising a resilient tooth 101 protruding from the flap 93, and a fixed tooth 102 mounted to the clip portion 94. Resilient tooth 101 is formed with cutouts 105 and 106 on each side to permit it to deflect resiliently. In use, when the retaining member is moved to the open position (shown in dashed lines in Figure 4) the resilient tooth 101" of the open retaining member 93" engages the fixed tooth 102 to hold the retaining member 93" in the open position.

When the retaining member is in the open position shown in Figure 1 and Figure 2 at retaining member 8, and in Figure 4 in dashed lines, the retaining member being held open in a plane at approximately 90 degrees to the closed position, provides an unobstructed opening to the space 7 allowing the easy insertion of additional cables into the trunking system base 2. The "snap action" of the hinge, when the resilient teeth 101 and 102 pass each other so that the faces 103 and 104 abut, provides a positive feedback to an installer that the cable retainer is in the open position, and that it will remain in this position until a similar positive action is taken to "snap" the retaining member into the closed position. In a typical installation, on a long run of trunking there will be many cable retainers, and to facilitate cable insertion into the trunking the installer must ensure each cable retainer is held in the open position, and a benefit of the snap action is that this enables the installer to achieve this.

The hinge end 91 of the retaining member 8 has an end face 110 and the releasable end 82 has an end face 112. When the retaining member 8 is in the closed position end face 110 abuts an edge 111 of the second connecting means 42 and end face 112 abuts an edge 113 of second connecting means 62. Hence a force F applied against the side wall 6 may be resisted by the retaining member 8 when it is closed. Hence the lid 3, when fitted, may be retained more securely on the side walls of the trunking.

The base 2 has a location 115 to locate a partition member (not shown) if it is required to divide the enclosed space 7 to provide two enclosed spaces to enable segregation of cables. The retaining member 8 is provided with a location 116 to engage with and locate a free edge of the partition member so as to ensure that the partition member is adequately supported. The location 116 has a chamfered opening formed by protrusions 117 and 119 to ensure that the free edge of the partition member is easily located in the location 116.

From Figure 3 it may be seen that the retaining member 8' is arranged such that when it is in the closed position the lid 3 may be fitted to the base 2. The hinge end 91' and the releasable end 82' are both fully enclosed by the lid 3. The lid 3 has third connecting means 30 and 30' along each longitudinal edge which co-operate with the first connecting means 41 and 61 to retain the lid to the base.

## Claims

1. A trunking system (1) comprising at least a trunking (120) and at least one retaining member (8), the trunking comprising at least a base (2) and a lid (3) for the base, the base having a first and a second parallel side walls (4, 6) extending therefrom, the side walls each having a top edge (40, 60), with a first and a second connecting means (41, 61) extending along the top edge of each side wall, and the lid having a third connecting means (30, 30'), the third connecting means arranged to co-operate with the said first connecting means to releasably retain the lid to the base, the retaining member being arranged such that when it is in a closed position the lid may be fitted to the base over the retaining member, the retaining member has a first end (91) with first retaining means and a hinge (92) and a second end (82), the retaining member being arranged to be held closed at each end by respective connecting means, **characterised in that** when open, the retaining member is arranged to be held open by co-operating abutment surfaces (103, 104) on the first retaining means.

2. A trunking system as claimed in claim 1, wherein the retaining member further comprises a second end having a latch (83) arranged to co-operate with the second connecting means to hold the retaining member in the closed position.

3. A trunking system as claimed in claim 1 or 2, wherein the retaining member in an open position is arranged to be held open in a plane at substantially 90 degrees to the closed position.

4. A trunking system as claimed in claim 1 or 2, wherein the hinge comprises a flexible hinge portion (92) arranged to hingedly connect a flap part (93) of the retaining member to a clip portion (94) of the retaining member, and wherein the clip portion is arranged to be mounted to the second connecting means on the first sidewall.

5. A trunking system as claimed in any of the preceding claims, wherein the clip portion and the flap part are each provided with a protrusion (101, 102), the abutment surfaces being on the protrusions.

6. A trunking system as claimed in claim 5, wherein at least one protrusion (101) is arranged to be resiliently deflectable with respect to the retaining member.

7. A trunking system as claimed in claim 6, wherein the at least one protrusion is mounted to the flap part.

8. A trunking system substantially as described with reference to the accompanying drawings.
